(19) Europäisches Patentamt
European Patent Office
Office européen des brevets

(11) Veröffentlichungsnummer: **0 033 854**
**A1**

# (12) EUROPÄISCHE PATENTANMELDUNG

(21) Anmeldenummer: **81100265.8**

(22) Anmeldetag: **15.01.81**

(51) Int. Cl.³: **H 05 K 11/02**, H 04 B 1/08

(30) Priorität: **08.02.80 DE 3004630**

(43) Veröffentlichungstag der Anmeldung: **19.08.81**
**Patentblatt 81/33**

(84) Benannte Vertragsstaaten: **FR GB IT**

(71) Anmelder: **Blaupunkt-Werke GmbH,**
**Robert-Bosch-Strasse 200, D-3200 Hildesheim (DE)**

(72) Erfinder: **Spiegel, Bernt, Dr. Prof., Hauptstrasse 118,**
**D-6803 Edingen (DE)**

(74) Vertreter: **Eilers, Norbert, Dipl.-Phys.,**
**Robert-Bosch-Strasse 200, D-3200 Hildesheim (DE)**

## (54) Autoempfänger-Bedienteil.

(57) Es wird ein Autoempfänger-Bedienteil angegeben, dessen Frontwand zur Umschaltung des Empfängers dienende, aus der Frontwand herausragende Drucktasten aufweist, die eine blinde Bedienung zulassen. Hierzu sind in einer Vorderkante der Frontwand zur Fingerführung dienende, den einzelnen Drucktasten zugeordnete, Mulden vorgesehen.

EP 0 033 854 A1

BLAUPUNKT-WERKE GMBH 32 HILDESHEIM, Robert-Bosch-Straße 200

PLI Pieper-br/tex1

5. Februar 1980
R.Nr. 1655

## Stand der Technik

Die Erfindung geht aus von einem Autoempfänger-Bedienteil nach der Gattung des Hauptanspruches.

Bei den üblichen Autoempfängern erfolgt die Umschaltung der Wellenbereiche sowie fest einstellbarer Sender mit Hilfe von Drucktasten, welche in den Frontwänden der Autoempfänger-Bedienteile vorgesehen sind. Da die Bedienteile der Autoempfänger überwiegend in den Armaturenbrettern oder Mittelkonsolen der Kraftfahrzeuge angeordnet sind, befinden sie sich nicht im unmittelbaren Blickfeld des Fahrers. Ein gezieltes Betätigen der Drucktasten erfordert ein, wenn auch kurzzeitiges Hinblicken des Fahrers, welches ihn jedoch während einer Fahrt zwangsläufig vom Verkehrsgeschehen ablenkt. Ein blindes Auffinden der Drucktasten üblicher Autoempfänger ist während der Fahrt nicht ohne weiteres möglich. Zudem können hierbei unerwünschte Fehlbedienungen weiterer Bedienelemente nicht ausgeschlossen werden.

## Vorteile der Erfindung

Das erfindungsgemäße Autoempfänger-Bedienteil mit den kennzeichnenden Merkmalen des Hauptanspruchs hat demgegenüber den Vorteil, daß die Drucktasten völlig blind betätigt werden können, ohne daß dabei die Aufmerksamkeit des Fahrers wesentlich vom Verkehrsgeschehen abgelenkt wird. Zudem können sehr kleine, platzsparende Drucktasten verwendet werden.

0033854



Durch die in den Unteransprüchen aufgeführten Maßnahmen ergeben sich vorteilhafte Weiterbildungen der Erfindung. So ist bei einer Ausführung nach Anspruch 2 das gezielte Auffinden einzelner Tasten, die beispielsweise zur Umschaltung von Empfangsbereichen dienen, schnell und problemlos möglich. Eine Ausführung nach Anspruch 3 ermöglicht eine besonders platzsparende Anordnung mehrerer, beispielsweise zur Umschaltung fest einstellbarer Sender vorgesehener Drucktasten. Durch eine vorteilhafte Ausgestaltung der Frontwand nach Anspruch 4 kann das Auffinden der Drucktasten weiter erleichtert werden. Bei einer Bemessung und Ausführung nach Anspruch 5 wird die Ertastbarkeit zusätzlich verbessert.

Zeichnung

Ein Ausführungsbeispiel der Erfindung ist in der Zeichnung dargestellt und in der nachfolgenden Beschreibung näher erläutert. Es zeigen Figur 1 die Vorderansicht der Frontwand eines Autoempfänger-Bedienteils, Figur 2 einen eine Drucktaste aufweisenden Ausschnitt der Frontwand, Figur 3 und Figur 4 Schnittzeichnungen dieses Ausschnittes.

Beschreibung der Erfindung

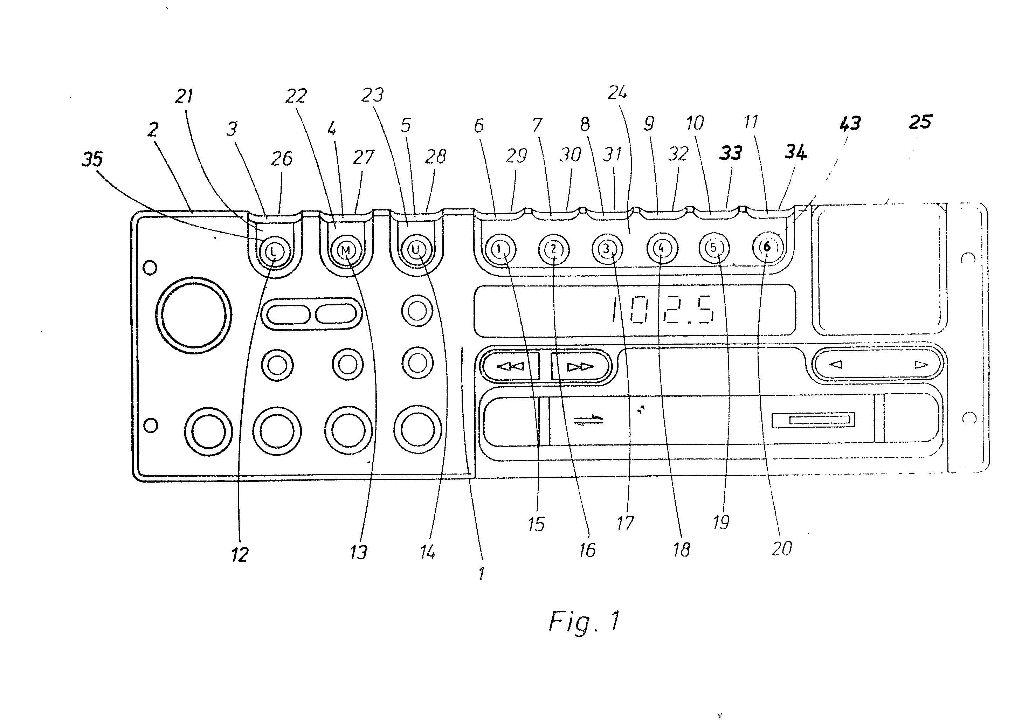

Eine in der Figur 1 dargestellte, aus Kunststoff oder Metall hergestellte plattenförmige Frontwand 1 eines Autoempfänger-Bedienteils weist nicht näher dargestellte, diverse Bedien- und Anzeigeelemente auf. Die obere Vorderkante 2 der Frontwand 1 ist mit mehreren, nebeneinander angeordneten Mulden 3-11 versehen, die derart ausgebildet sind, daß sie von einem an der oberen Vorderkante 2 entlanggeführten Finger als Fingermulden ertastet werden können.

0033854



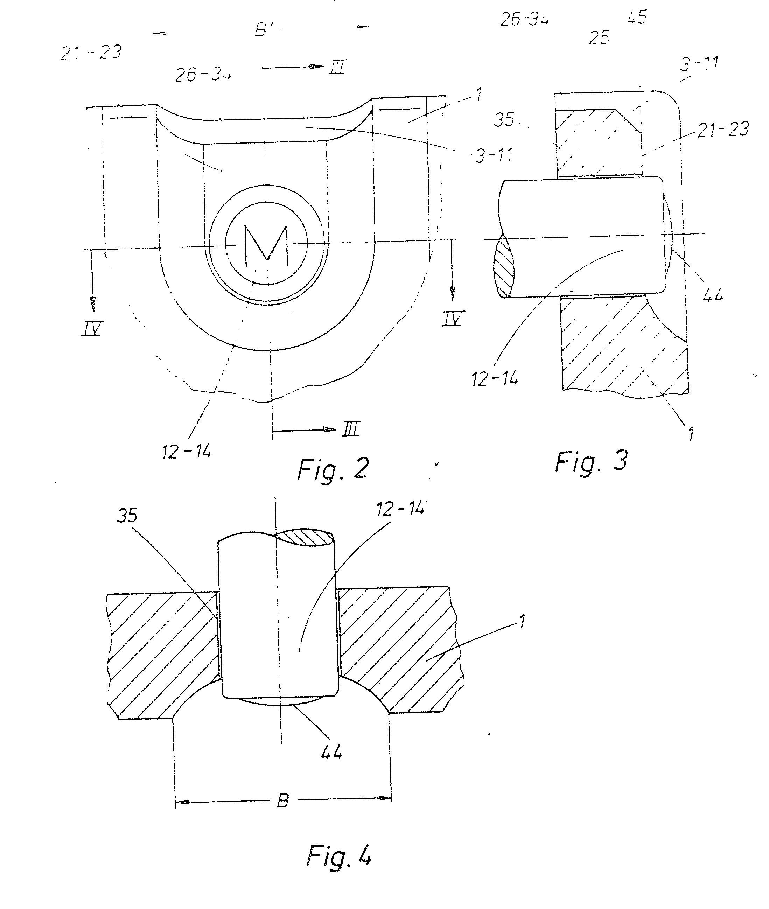

Unterhalb jeder Mulde 3-11 ist eine aus der Frontwand 1 herausragende, nahe der oberen Vorderkante 2 und mittig zur Mulde angeordnete runde Drucktaste 12-20 vorgesehen. Die zur Umschaltung der Empfangsbereiche vorgesehenen Drucktasten 12, 13, 14 sind in muldenförmigen Vertiefungen 21, 22, 23 der Frontwand 1 angeordnet, wobei die sich bis in die Mulden 3, 4, 5 hin erstreckenden Vertiefungen 21, 22, 23 Breiten B aufweisen, welche den Breiten B' der ihnen zugeordneten Mulden 3, 4, 5 entsprechen. Eine Anordnung einer derartigen Drucktaste ist in den Figuren 2, 3 und 4 näher dargestellt. Die zur Umschaltung fest einstellbarer Sender vorgesehenen Drucktasten 15-20 sind in einer ihnen gemeinsam zugeordneten Vertiefung 24 der Frontwand 1 angeordnet, welche sich bis in die den Drucktasten 15-20 zugeordneten Mulden 6-11 hin erstreckt. Die obere Außenseite 25 der Frontwand 1 ist mit den Mulden 3-11 zugeordneten Vertiefungen 26-34 versehen, welche derart ausgebildet sind, daß sie ein noch leichteres Auffinden der Mulden 3-11 ermöglichen.

Durch die Ausformung der Frontwand 1 bei den 3 + 6 Tasten 12-20 werden sehr kleine Tasten möglich, wobei aber taktil jeweils die ganze Tastenumgebung mit zur Taste gehört.

Jede der aus Bohrungen 35-43 der Frontwand 1 herausragenden Drucktasten 12-20 ist an ihrer Bedienseite mit einer balligen Wölbung 44 versehen und derart bemessen, daß im eingerasteten Zustand die ballige Wölbung 44 eben noch aus der Ebene 45 der Frontwand 1 herausragt. Zum Ausrasten durch Überdrücken steht dann noch genügend Weg zur Verfügung, zumal der Scheitelpunkt der Tastenwölbung 44 ohne weiteres unter die Ebene 45 der Frontwand 1 gedrückt werden kann. Durch die Maßnahme wird die Ertastbarkeit zusätzlich verbessert.

0033854

BLAUPUNKT-WERKE GMBH 32 HILDESHEIM, Robert-Bosch-Straße 200



Patentansprüche

1. Autoempfänger-Bedienteil, dessen Frontwand zur Umschaltung des Empfängers dienende, aus der Frontwand herausragende Drucktasten aufweist, dadurch gekennzeichnet, daß mindestens eine Vorderkante (2) der Frontwand (1) mehrere nebeneinander angeordnete, zur Fingerführung vorgesehene Mulden (3-11) aufweist, denen jeweils eine nahe der Vorderkante (2) der Frontwand (1) angeordnete Drucktaste (12-20) zugeordnet ist.

2. Autoempfänger-Bedienteil nach Anspruch 1, dadurch gekennzeichnet, daß einzelne Drucktasten (12, 13, 14) in ihnen zugeordneten Vertiefungen (21, 22, 23) der Frontwand (1) angeordnet sind, deren Breiten (B) etwa den Breiten (B') der einzelnen Mulden (3, 4, 5) entsprechen und die sich bis in diese hin erstrecken.

3. Autoempfänger-Bedienteil nach Anspruch 1, dadurch gekennzeichnet, daß mehrere Drucktasten (15-20) in einer ihnen gemeinsam zugeordneten Vertiefung (24) der Frontwand (1) angeordnet sind, welche sich bis in die den Drucktasten (15-20) zugeordneten Mulden (6-11) hin erstreckt.

4. Autoempfänger-Bedienteil nach einem der Ansprüche 1 bis 3, dadurch gekennzeichnet, daß mindestens eine Außenseite (25) der Frontwand (1) den Mulden (3-11) zugeordnete Vertiefungen (26-34) aufweist.

BLAUPUNKT-WERKE GMBH 32 HILDESHEIM, Robert-Bosch-Straße 200



5. Autoempfänger-Bedienteil nach einem der Ansprüche 1 bis 4, dadurch gekennzeichnet, daß die Drucktasten (12-20) eine ballige Wölbung (44) aufweisen und daß sie derart bemessen sind, daß im eingerastetem Zustand die ballige Wölbung (44) eben noch aus der Ebene (45) der Frontwand (1) herausragt.

0033854

1/2

25
43
34
11
33
10
32
9
24
31
8
30
7
29
6
28
5
23
27
4
22
26
3
21
2
35
20
19
18
17
16
15
1
14
13
12


Fig. 1

R Nr 1655
0033854

B'
21-23
26-34
III
1
3-11
IV
IV
12-14
III
26-34
45
25
3-11
35
21-23
44
12-14
1
35
12-14
1
44
B

Fig. 2

Fig. 3

Fig. 4

Europäisches Patentamt

# EUROPÄISCHER RECHERCHENBERICHT

0033854

Nummer der Anmeldung
EP 81100265.8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 1 413 424 (INT. STANDARD)<br>+ Fig. 3; Seite 2, Zeilen 46-54 +<br>-- | 1 |
| | DE - C - 737 460 (AEG)<br>+ Fig. 6,7; Seite 3, Zeilen 63ff +<br>-- | 1 |
| | DE - A - 1 515 964 (GEO. W. KING LTD.)<br>+ Fig. 5,6; Seite 9, Zeilen 8ff +<br>-- | 1 |
| | CH - A - 474 172 (UNINORM ETABL.)<br>+ Fig. 1; Spalte 3, Zeilen 39ff +<br>-- | 3 |
| | DE - B - 1 197 501 (FERNSEH GMBH)<br>+ Fig. 1,2; Spalte 3, Zeilen 34-39 +<br>-- | 3 |
| | AT - B - 4 578 (DE JANISCH)<br>+ Fig. 2 +<br>---- | 5 |

KLASSIFIKATION DER ANMELDUNG (Int. Cl.3)

H 05 K 11/02
H 04 B 1/08

RECHERCHIERTE SACHGEBIETE (Int. Cl.3)

H 05 K 5/00
H 05 K 7/00
H 05 K 11/00
H 04 B 1/00
H 04 N 5/00
H 04 Q 9/00
H 03 J 1/00
H 03 J 5/00
H 02 B 1/00
H 01 H 3/00
H 01 H 13/00
G 09 B 13/00
G 09 B 21/00
G 08 C 17/00
G 08 C 19/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 07-05-1981 | HUBER |

Europäisches Patentamt

**EUROPÄISCHER RECHERCHENBERICHT**

0033854

Nummer der Anmeldung

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | | | RECHERCHIERTE SACHGEBIETE (Int. Cl.³) |
| | | | G 08 C 23/00<br>B 66 C 13/00 |